# EUROPEAN PATENT SPECIFICATION

(11) **EP 0 684 608 B1**
(45) Date of publication and mention of the grant of the patent: **06.10.1999**
(21) Application number: 94830235.1
(22) Date of filing: 23.05.1994
(51) Int. Cl.: G11B 21/10, G11B 5/596, G11B 20/10

(54) **Device for processing servo signals in a parallel architecture PRML reading apparatus for hard disks**
Vorrichtung zur Verarbeitung von Servosignalen in einer in Parallelarchitektur ausgeführten Lesevorrichtung für Festplatten
Dispositif de traitement de signaux d'asservissement dans un appareil de lecture à architecture PRML parallèle pour disques durs

(43) Date of publication of application: 29.11.1995
(73) Proprietor: STMicroelectronics S.r.l., 20041 Agrate Brianza (Milano) (IT)
(72) Inventor: Zuffada, Maurizio, I-20143 Milano (IT); Gadducci, Paolo, I-56018 Pisa (IT); Moloney, David, I-20010 Cornaredo (Milano) (IT); Pisati, Valerio, I-27049 Bosnasco (Pavia) (IT)
(74) Representative: Mittler, Enrico

(56) References cited:
- EP-A- 0 595 454
- US-A- 5 089 757
- US-A- 5 255 128
- US-A- 5 255 131

## Description

The present invention relates to a device for processing servo signals in a parallel architecture PRML reading apparatus for hard disks.

The PRML initials (Partal-Response signaling with Maximum-Likelyhood sequence detection) are used to identify a technique for processing data read on a magnetic support (such as a hard disk or a magnetic tape), that provides for the use and sampling of only a part of the input signal's frequency band and the search for the maximum likelyhood of correspondence of the levels of the output signal with the samples obtained from the input signal.

In a known PRML reading/writing channel the analog signal from the magnetic head is processed and reconstructed digitally through an apparatus that carries out a first analog equalization by means of a variable-gain input amplifier and a continuous low-pass filter, at whose output, with a suitable selection of the cut-off frequency, of the high-frequency accentuation (boost) and of other parameters such as group delay, it is possible to obtain a signal with a minimum InterSymbol Interference, ISI. The output of the analog filter is then sampled through an analog-digital converter and subsequently processed through a transversal digital filter (called FIR, Finite Impulse Response), that further reduces the ISI, possibly another filter (Pole Tip Filter) that eliminates the small undesired peaks produced when the magnetic support enters or leaves the influence area of a thin-film reading head, a Viterbi detector (that is, a maximum likelyhood sequence detector operating with the so-called Viterbi algorithm, for example described in G.D. Forney, Jr., "The Viterbi Algorithm", Proc. IEEE, vol. 61, No. 3, pages 268-278, March 1973), that converts a sequence with many bits into a sequence with just one bit on the basis of a maximum likelyhood concept) and a decoder capable of converting the RLL (Run Length Limited) code commonly utilized for writing data on a magnetic support in the NRZ (Non-Return to Zero) code commonly utilized for using the read signal on the part of the user.

There are also two feed-back loops, of which one containing a unit for controlling the gain of the input amplifier, that allows the stabilization of the input signal's amplitude, and the other containing a unit for controlling the timing, that allows the timing signal of the analog-digital converter to be reconstructed from the data read on the magnetic support.

When an apparatus as described above is used for reading data stored on a hard disk, it is also usual to provide it with a device for processing signals for controlling the position of the reading head, that uses special signals prerecorded on the disk by the manufacturer (normally called "servo signals") in order to obtain appropriate signals for operating the actuator of the head's support.

In order to attain high track densities with a low likelyhood of off-track operation, the technique currently in use provides for the extraction of the integral of the servo signals' module (typically 4 bursts at the PRML channel's maximum response frequency) in a predetermined timing window and the passage of the analog value of the integrated voltages to an external high-resolution (10 bit) analog-digital converter, whose output is processed by a digital signal processor that controls the actuator of the head's support.

The operation of integration is necessary to reduce the effects of the noise introduced in the reading process, a noise that increases as the distance between adjacent tracks decreases.

A known device for processing servo signals using this technique in a PRML reading apparatus as described above comprises in particular an analog demodulator formed by a full-wave rectifier, that receives and rectifies the analog signal at the output of the low-pass filter, an integrator and an S/H buffer with an analog multiplexer, that stores the detected signals and transmits them in time succession to the external analog-digital converter.

US-A-5 255 128 discloses a device as defined in the preamble of claim 1. In this device the signal is first digitized in an analog-digital convertor and then split into two parallel channels each comprising a digital equaliser and a Viterbi detector.

US-A-5 089 757 disclose a digital detector in which the servo signals are obtained by rectifying and integrating the output signal of an analog-digital convertor.

In a patent application of the same Applicant (EP-A-0 684 605) filed on the same date there is described a new and advantageous parallel architecture PRML reading apparatus, wherein the transversal filter is of the analog type and is arranged at the output of the low-pass analog filter and between said transversal filter and the RLL-NRZ decoder there are two parallel processing channels, each of which, comprise an analog-digital converter and a Viterbi detector arranged in succession one after the other and operates according to sampling sequences that alternate with one another.

The object of the present invention is now to provide a device for processing servo signals, that can be used to advantage in a parallel architecture PRML reading apparatus such as that described in the abovementioned patent application of the same Applicant filed on the same date.

According to the invention such object is attained with a device as defined in claim 1 for processing servo signals in a parallel architecture PRML reading apparatus of the type comprising a variable-gain input amplifier, a low-pass analog filter, a transversal analog filter and two distinct and parallel processing channels interposed between the transversal analog filter and an RLL-NRZ decoder, said processing channels comprising respective analog-digital converters followed by respective Viterbi detectors and operating according to sampling sequences that alternate with one another, said device comprising a rectifier and an integrator and wherein said rectifier is connected to the outputs of said analog-digital converters.

In this way the device for processing the servo signals no longer receives an analog signal to be integrated, then to be sampled and lastly to be sent to an external high-resolution analog-digital converter. Instead, it receives alternated sequences of digital signals that it can rectify by a rectifier that is simpler than that required for an analog signal and above all do not require further operations of sampling, multiplexing and high-resolution analog-digital conversion. In particular this latter operation has in fact already been carried out by the two (normally 6-bit) converters that process the main signal and whose sampling frequency can possibly be increased within the limits of the periods of operation in the servo mode.

The features of the present invention will be understood more clearly by making reference, as an example, to the enclosed drawings, wherein:
Fig. 1 shows the principle outline of a PRML reading apparatus of the traditional type, provided with a device for processing servo signals according to the known art;
Fig. 2 shows the principle outline of a parallel architecture PRML reading apparatus, provided with a device for processing servo signals according to the present invention;
Fig. 3 shows the detail of the integrator used in the device of Fig. 2.

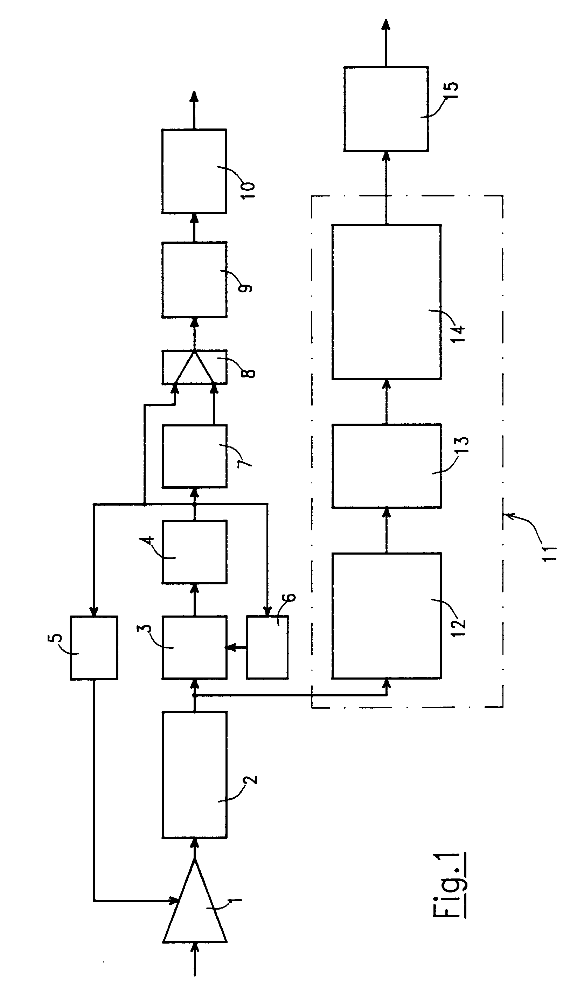

There is represented in Fig. 1 a PRML reading apparatus of the traditional type, provided with a device for processing servo signals also of the traditional type.

In the abovementioned figure there are indicated with 1 a variable-gain input amplifier, with 2 a low-pass analog filter, with 3 a 6-bit analog-digital converter, with 4 a transversal digital filter, with 5 a gain control unit inserted in a gain control loop for the input amplifier, with 6 a timing control unit inserted in a timing control loop for the converter 3, with 7 a further filter for eliminating the undesired peaks produced by thin-film heads, if any, with 8 an on/off switch of the filter 7, with 9 a Viterbi detector and with 10 an RLL-NRZ decoder.

The corresponding control device of the servo signals in turn comprises an analog demodulator 11 formed by a full-wave rectifier 12 connected to the output of the low-pass filter 2, by an integrator 13 and by an S/H buffer unit and analog multiplexer 14, whose output is connected to the output of a 10-bit analog-digital converter 15.

At the output of the latter there is thus available a digital signal suitable for controlling the actuator of the reading head.

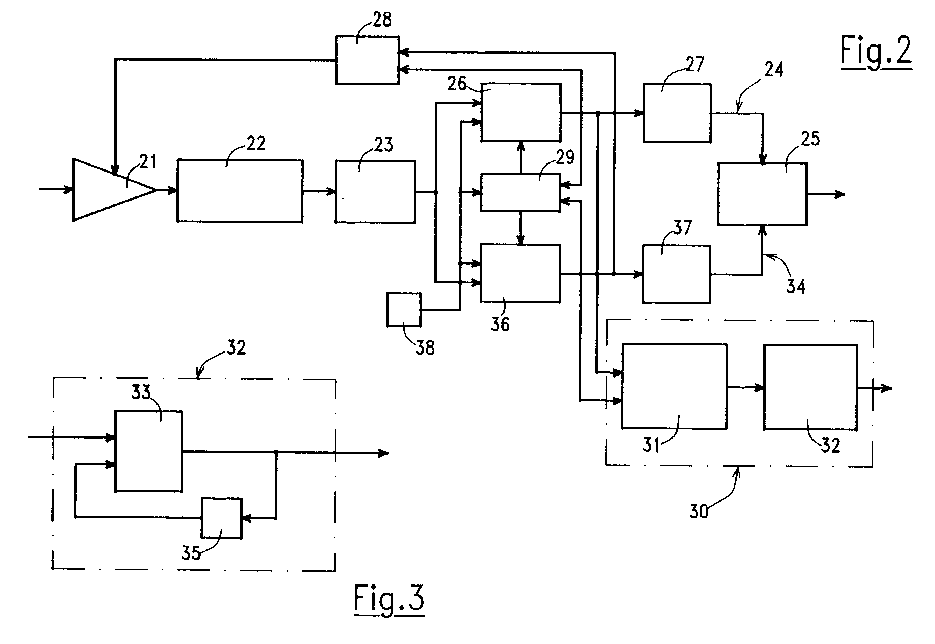

There is on the other hand represented in Fig. 2 a parallel architecture PRML reading apparatus according to the previously mentioned patent application filed on the same date, that comprises in succession a variable-gain input amplifier 21, a low-pass analog filter 22 and a transversal analog filter (FIR) 23.

Two parallel processing channels 24 and 34 branch out from the output of the latter and converge in an RLL-NRZ decoder 25; each of them comprises a 6-bit analog-digital converter 26, 36 and a Viterbi detector 27, 37.

A gain control loop for the input amplifier 21 comprises a gain control unit 28 that receives the outputs of the two analog-digital converters 26, 36 and controls on their basis the gain of the input amplifier 21.

A timing control loop, substantially constituted by two half-loops, one for each analog-digital converter 26, 36, comprises a timing control unit 29, that reconstructs the clock signals for the two converters, obtaining them from the data read on the magnetic support.

The writing code used, such as for example the RLL code (0, 4/4) mentioned in Paul H. Siegel and Jack K. Wolf, "Modulation and Coding for Information Storage", IEEE Communications Magazine, December 1991, pages 68-86, is such as to provide alternated sequences of samplings on the two channels 24, 34, that thus independently process the even index samples and those with an odd index, obviously at a frequency equal to half that of the RLL frequency.

With the abovementioned parallel architecture reading apparatus there is associated a control device for the servo signals, that is indicated as a whole with the numerical reference 30 and in turn comprises a full-wave rectifier 31 connected to the outputs of the two analog-digital converters 26, 36 and an integrator 32.

At the latter's output the digital signal destined to control the actuator of the reading head is thus already available.

A principle outline of the integrator 32 is illustrated as an example in Fig. 3 and comprises an adder 33 with a feed-back loop including a delay circuit 35.

With the numerical reference 38 there is indicated in Fig. 2 a switch for alternately operating the PRML reading apparatus for processing data and for processing the servo signals.

## Claims

1. Device for processing signals in a parallel architecture PRML reading apparatus, said device comprising a variable-gain input amplifier (21), a low-pass analog filter (22) a transversal filter (23), analog-digital conversion means and two distinct and parallel processing channels (24, 34) interposed between said transversal filter (23) and an RLL-NRZ decoder (25), said processing channels (24, 34) comprising respective Viterbi detectors (27, 37) and operating according to sampling sequences that alternate with one another characterized in that said transversal filter (23) is constituted by a common analog transversal filter arranged at the output of said low-pass filter, said analog-digital conversion means are constituted by two analog-digital convertors (26, 36) each arranged in a respective one of the two channels between said common analog transversal filter and said two Viterbi detectors and said device further comprising, for processing servo signals, a rectifier (31) whose inputs being connected to the outputs of said analog-digital converters (26, 36) and whose output is connected to an integrator (32).

2. Device according to claim 1, characterized in that said integrator (32) comprises an adder (33) provided with a feed-back loop comprising a delay circuit (35).

## Patentansprüche

1. Vorrichtung zum Verarbeiten von Signalen in einem Lesegerät einer Parallelarchitektur PRML, wobei die Vorrichtung aufweist
einen Eingangsverstärker (21) variabler Verstärkung,
einen Tiefpaßanalogfilter (22),
einen Transversalfilter (23),
Analog/Digitalwandlungsmittel und zwei getrennte und parallele Verarbeitungskanäle (24, 34), die zwischen das Transversalfilter (23) und einen RLL-NRZ-Dekoder (25) eingefügt sind, wobei die Verarbeitungskanäle (24, 34) entsprechende Viterbi-Detektoren (27, 37) aufweisen und gemäß Abtastsequenzen tätig sind, die miteinander abwechseln,
dadurch gekennzeichnet,
daß das Transversalfilter (23) durch ein analoges Transversalfilter dargestellt ist, das an dem Ausgang des Tiefpaßfilters angeordnet ist,
daß die Analog/Digitalwandlungsmittel durch zwei Analog/Digitalwandler (26, 36) dargestellt sind, von denen jeder in einem entsprechenden der zwei Kanäle zwischen dem analogen Transversalfilter und den zwei Viterbi-Detektoren angeordnet ist, und
daß die Vorrichtung weiter zum Verarbeiten von Servosignalen einen Gleichrichter (31) aufweist, dessen Eingänge mit den Ausgängen der Analog/Digitalwandler (26, 36) verbunden sind und dessen Ausgang mit einem Integrator (32) verbunden ist.

2. Vorrichtung nach Anspruch 1,
dadurch gekennzeichnet, daß der Integrator (32) einen Addierer (33) aufweist, der mit einer Rückkopplungsschleife versehen ist, die eine Verzögerungsschaltung (35) aufweist.

## Revendications

1. Dispositif de traitement de signaux dans un appareil de lecture PRML à architecture parallèle, ce dispositif comprenant un amplificateur d'entrée à gain variable (21), un filtre analogique passe-bas (22), un filtre transverse (23), un moyen de conversion analogique-numérique et deux canaux de traitement parallèles et distincts (24, 34) interposés entre le filtre transverse (23) et un décodeur RLL-NRZ (25), les canaux de traitement (24, 34) comprenant des décodeurs de Viterbi respectifs (27, 37) et fonctionnant selon des séquences d'échantillonnage qui alternent l'une avec l'autre, caractérisé en ce que le filtre transverse (23) est constitué d'un filtre transverse analogique commun disposé à la sortie du filtre passe-bas, le moyen de conversion analogique-numérique étant constitué de deux convertisseurs analogique-numérique (26, 36) dont chacun est disposé dans l'un respectif des deux canaux entre le filtre transverse analogique commun et les deux détecteurs de Viterbi et le dispositif comprenant en outre, pour traiter des signaux d'asservissement, un redresseur (31) dont les entrées sont connectées aux sorties des convertisseurs analogique-numérique (26, 36) et dont la sortie est connectée à l'intégrateur (32).

2. Dispositif selon la revendication 1, caractérisé en ce que l'intégrateur (32) comprend un additionneur (33) muni d'une boucle de réaction comprenant un circuit de retard (35).
